# EUROPÄISCHE PATENTSCHRIFT

(11) **EP 1 197 420 B1**
(45) Veröffentlichungstag und Bekanntmachung des Hinweises auf die Patenterteilung: **14.01.2009**
(21) Anmeldenummer: 01124536.2
(22) Anmeldetag: 12.10.2001
(51) Int. Cl.: B62B 3/06

(54) **Flurförderzeug mit Markierungen auf dem Lastaufnahmemittel**
Industrial truck with markers on the load lifting means
Véhicule industriel ayant des repères sur les moyens de levage de charge

(30) Priorität: 13.10.2000 DE 10050858
(43) Veröffentlichungstag der Anmeldung: 17.04.2002
(73) Patentinhaber: STILL SAS, 77716 Marne La Vallée Cedex 4 (FR)
(72) Erfinder: Fortin, Dominique, 60160 Montataire (FR); Bimont, Cyril, 60940 St Vaast, Angicourt (FR); Alegre, Jean-Pierre, 60150 Thourotte (FR); Garcia, David, 60560 Orry-la-Ville (FR)
(74) Vertreter: Geirhos, Johann

(56) Entgegenhaltungen:
- EP-A- 0 933 281

## Beschreibung

Die Erfindung betrifft ein Flurförderzeug, insbesondere Palettenhubwagen oder Kommissionierfahrzeug nach dem Oberbegriff des Anspruchs 1.

Mit dem Lastaufnahmemittel, das häufig als Lastgabel ausgeführt ist, können Lasten unterschiedlicher Art angehoben und transportiert werden. Die Lasten sind dabei häufig von hinsichtlich ihrer Abmessungen genormten Transportmitteln, insbesondere von Paletten oder Rollcontainern gebildet.

Paletten und Rollcontainer sind in Lagerräumen häufig hintereinander, aneinander anschließend aufgestellt. Der Bedienperson des Flurförderzeugs stellt sich häufig die Aufgabe, genau eine Palette oder genau einen Rollcontainer mit dem Flurförderzeug aufzunehmen. In der betrieblichen Praxis kommt es hierbei häufig vor, dass die Palette bzw. der Rollcontainer nicht vollständig unterfahren wird. Nach dem anschließenden Anheben des Lastaufnahmemittels befindet sich die Palette bzw. der Rollcontainer in einer instabilen oder schrägen Position was letztlich zu einer Beschädigung der zu transportierenden Last führen kann.

Ein anderer, bei der obengenannten Aufgabe häufig auftretender Fehler besteht darin, dass mit dem Lastaufnahmemittel zu weit unter die Palette oder unter den Rollcontainer eingefahren wird, so dass sich das lastseitige Ende des Lastaufnahmemittels bereits unter der nächsten Palette bzw. unter dem nächsten Rollcontainer befindet. Wenn daraufhin das Lastaufnahmemittel angehoben wird, führt dies häufig zu einer Beschädigung dieser nächsten Palette oder dieses nächsten Rollcontainers, im Extremfall sogar zu einem Verbiegen des Lastaufnahmemittels.

Ein weiterer regelmäßig auftretender Fehler besteht darin, dass mit dem Lastaufnahmemittel genau so weit in eine Palette mit quer angeordneten Bodenbrettem eingefahren wird, dass sich die unterhalb des Lastaufnahmemittels angeordneten Lastrollen genau auf einem der durchgehenden Bodenbretter befindet. Wenn das Lastaufnahmemittel dann angehoben wird, wird die Palette gesprengt.

Aus der DE 198 03 706 A1 ist es bekannt, auf der Oberseite des Lastaufnahmemittels durch Laserschneiden Markierungen anzubringen, welche die optimale Einfahrlänge in mindestens ein Transportmittel kennzeichnen. Derartige Markierungen haben jedoch den Nachteil, dass sie nicht an neue Transportmittel oder an geänderte Einsatzbedingungen des Flurförderzeugs angepasst werden können. Darüber hinaus verringem die durch Laserschneiden erzeugten Ausnehmungen die Belastbarkeit des Lastaufnahmemittels.

Aus der DE 298 16 656 U1 ist ein Flusfördnung mit Traggabeln bekannt. Die Traggabeln sind aus jeweils zwei längs angeordneten Tragenden Profilen aufgebant, die zumindest in Teilen ihner Längsentrechung zwichen sich eine vertieft angeordnete Fläche aufweisen.

Der Erfindung liegt daher die Aufgabe zugrunde, ein Flurförderzeug der eingangs genannten Art zur Verfügung zu stellen, das eine Vertiefung, in der dauerhafte Markierungen entfernbar angeordnet werden können, aufweist, die hostengünstig und einfach herzustellen ist.

Diese Aufgabe wird erfindungsgemäß durch ein Flurförderzeug mit den Merkmalen des Anspruchs 1 gelöst.

Mit besonderem Vorteil ist die Vertiefung durch Umformen in das Lastaufnahmemittel eingearbeitet. Die Vertiefung kann hierbei mit den selben Werkzeugen geformt werden, die auch zur Herstellung des Lastaufnahmemittels selbst verwendet werden.

Eine besonders flexible Ausgestaltung der Erfindung liegt vor, wenn die Markierung durch eine Bedienperson des Flurförderzeugs aufbringbar und/oder entfernbar ist.

Ein besonders einfaches Aufbringen oder Entfernen der Markierung wird ermöglicht, wenn die Markierung von einem selbsthaftenden Element, beispielsweise einem Aufkleber oder einer Magnetfolie, gebildet ist. Ein als Aufkleber ausgeführtes selbsthaftendes Element ist besonders unempfindlich gegen äußere Einflüsse, wenn es überwiegend aus Kunststoff besteht.

Gemäß einer zweckmäßigen Weiterbildung der Erfindung sind auf das selbsthaftende Element Zahlen, Buchstaben und/oder Zeichen gedruckt. Die Zahlen, Buchstaben und/oder Zeichen geben beispielsweise ein Längenmaß oder die Art des Transportmittels wieder.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Flurförderzeug in Draufsicht,
- Figur 2: einen Lastarm im Querschnitt.

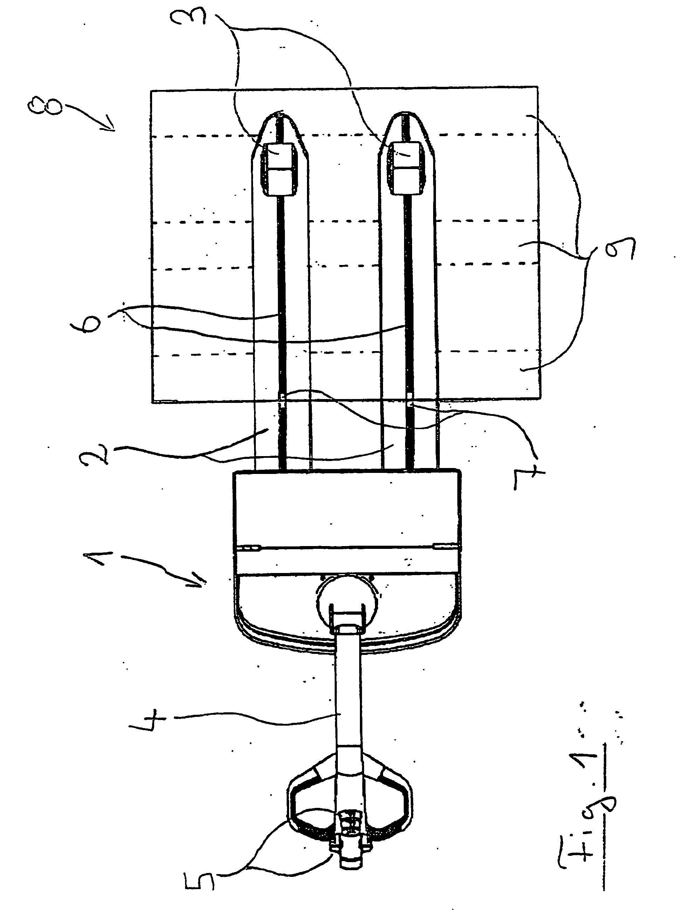

Figur 1 zeigt als erfindungsgemäßes Flurförderzeug einen deichselgeführten Niederhubwagen. Das Flurförderzeug weist einen Antriebsteil 1 und ein relativ zu dem Antriebsteil 1 anhebbares Lastaufnahmemittel 2 auf. Im vorliegenden Ausführungsbeispiel besteht das Lastaufnahmemittel 2 aus zwei Lastarmen, die sich mit verstellbaren Lastrollen 3 auf einer Fahrbahn abstützen. An dem Antriebsteil 1 des Flurförderzeugs ist eine Lenkdeichsel 4 angeordnet, die zum Lenken des Flurförderzeugs um eine vertikale Achse geschwenkt wird und an der Bedienelemente 5 zum Steuern des Flurförderzeug angeordnet sind.

Erfindungsgemäß weist jeder Lastarm des Lastaufnahmemittels 2 eine rillenförmige Vertiefung 6 auf, in denen im vorliegenden Ausführungsbeispiel jeweils eine Markierung 7 aufgebracht ist.

Ebenfalls dargestellt sind die Umrisslinien eines von einer Palette gebildeten Transportmittels 8, sowie mit gestrichelten Linien deren Bodenbrettern 9. Wenn, wie in der vorliegenden Abbildung, das Lastaufnahmemittel 2 genau bis zu den Markierungen 7 in die Palette eingefahren wird, befinden sich die Lastrollen 3 zwischen zwei Bodenbrettern 9, so dass die Palette bei einem Anheben des Lastaufnahmemittels 2 nicht beschädigt wird.

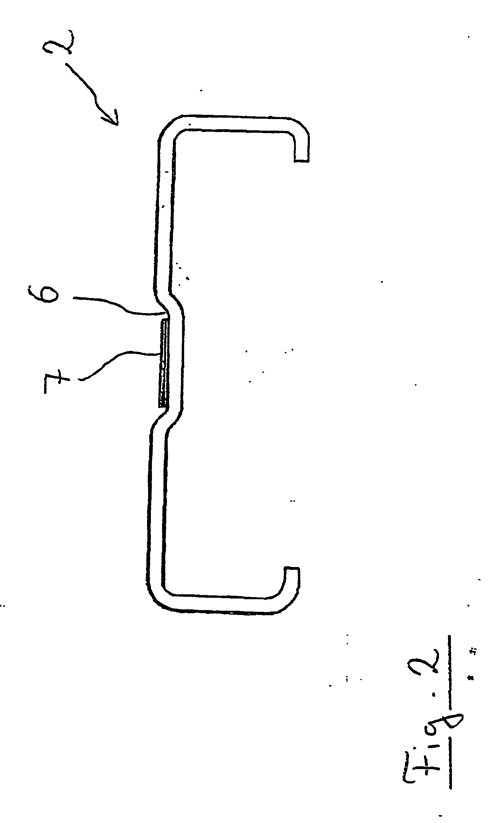

Figur 2 zeigt den Querschnitt eines Lastarms des Lastaufnahmemittels 2 gemäß Fig. 1. Das Profil des Lastarms ist durch Umformen aus Blech hergestellt. Ebenfalls durch Umformen eingearbeitet ist die rillenförmige Vertiefung 6, in der die Markierung 7 angeordnet ist. Die Markierung 7 ist im vorliegenden Ausführungsbeispiel von einem selbstklebenden Aufkleber gebildet, der von einer Bedienperson selbst angebracht und gegebenenfalls wieder entfernt werden kann. Infolge der Anordnung in der Vertiefung 6 befindet sich die Oberfläche der Markierung 7 unterhalb der Oberfläche der seitlich der Vertiefung 6 befindlichen Bereiche des Lastarms. Hierdurch tritt das Lastaufnahmemittel nicht in mechanischen Kontakt mit der Markierung 7, so dass diese nicht beschädigt wird und dauerhaft erkennbar bleibt.

## Patentansprüche

1. Flurförderzeug, insbesondere Palettenhubwagen oder Kommissionierfahrzeug, mit einem gabelförmigen Lastaufnahmemittel (2), wobei ein lastseitiges Ende des Lastaufnahmemittels (2) derart ausgebildet ist, dass Transportmittel (8), insbesondere Paletten und/oder Rollcontainer, mit dem Lastaufnahmemittel (2) unterfahren und gemeinsam mit dem Lastaufnahmemittel (2) vollständig angehoben werden können, wobei auf dem Lastaufnahmemittel (2) mindestens eine Markierung (7) anbringbar ist, deren Abstand zu dem lastseitigen Ende des Lastaufnahmemittels (2) einer bevorzugten Einfahrlänge des Lastaufnahmemittels (2) unter das Transportmittel (8) entspricht, wobei die Oberfläche des Lastaufnahmemittels (2) mindestens eine Vertiefung (6) aufweist, in welche die Markierung (7) aufbringbar ist, **dadurch gekennzeichnet, dass** die Vertiefung (6) von einer sich längs des Lastaufnahmemittels (2) erstreckenden Rille gebildet ist, welche durch Umformen in das Lastaufnahmemittel (2) eingearbeitet ist.

2. Flurförderzeug nach Anspruch 1 , **dadurch gekennzeichnet, dass** die Markierung (7) durch eine Bedienperson des Flurförderzeugs aufbringbar und/oder entfernbar ist.

3. Flurförderzeug nach einem der Ansprüche 1 oder 2, **dadurch gekennzeichnet, dass** die Markierung (7) von einem selbsthaftenden Element, beispielsweise einem Aufkleber oder einer Magnetfolie, gebildet ist.

4. Flurförderzeug nach Anspruch 3, **dadurch gekennzeichnet, dass** auf das selbsthaftende Element Zahlen, Buchstaben und/oder Zeichen gedruckt sind.

## Claims

1. Industrial truck, in particular pallet lift truck or order-picking vehicle, having a fork-like load lifting means (2), an end on the load side of the load lifting means (2) being formed in such a way that transport means (8), in particular pallets and/or roller containers, can be moved under with the load lifting means (2) and can be completely lifted together with the load lifting means (2), it being possible for at least one marker (7) to be applied to the load lifting means (2), of which marker the distance from the end on the load side of the load lifting means (2) corresponds to a desired insertion length of the load lifting means (2) under the transport means (8), the surface of the load lifting means (2) having at least one depression (6), in which the marker (7) can be applied, **characterized in that** the depression (6) is formed by a groove extending along the load lifting means (2), which groove is machined into the load lifting means (2) by shaping.

2. Industrial truck according to Claim 1, **characterized in that** the marker (7) can be applied to and/or removed from the industrial truck by an operator.

3. Industrial truck according to Claim 1 or 2,
**characterized in that** the marker (7) is formed by a self-adhesive element, for example a sticker or a magnetic film or foil.

4. Industrial truck according to Claim 3, **characterized in that** numbers, letters and/or symbols are printed onto the self-adhesive element.

## Revendications

1. Chariot de manutention, notamment transpalette ou chariot de préparation des commandes, comprenant un moyen de levage de charge en forme de fourche (2), une extrémité du côté de la charge du moyen de levage de charge (2) étant réalisée de telle sorte que des moyens de transport (8), notamment des palettes et/ou des conteneurs roulants puissent passer sur le moyen de levage de charge (2) et être soulevés complètement conjointement avec le moyen de levage de charge (2), au moins un repère (7) pouvant être appliqué sur le moyen de levage de charge (2), dont la distance à l'extrémité du côté de la charge du moyen de levage de charge (2) correspond à une longueur d'avance préférée du moyen de levage de charge (2) sous le moyen de transport (8), la surface du moyen de levage de charge (2) présentant au moins un renfoncement (6) dans lequel le repère (7) peut être appliqué, **caractérisé en ce que** le renfoncement (6) est formé par une gorge s'étendant le long du moyen de levage de charge (2), laquelle est creusée par formage dans le moyen de levage de charge (2).

2. Chariot de manutention selon la revendication 1, **caractérisé en ce que** le repère (7) peut être appliqué et/ou enlevé par un opérateur du chariot de manutention.

3. Chariot de manutention selon la revendication 1 ou 2, **caractérisé en ce que** le repère (7) est formé par un élément autoadhésif, par exemple un autocollant ou une feuille magnétique.

4. Chariot de manutention selon la revendication 3, **caractérisé en ce que** des numéros, des lettres et/ou des signes sont imprimés sur l'élément autoadhésif.
